# EUROPÄISCHE PATENTSCHRIFT

(11) **EP 2 769 084 B1**
(45) Veröffentlichungstag und Bekanntmachung des Hinweises auf die Patenterteilung: **27.06.2018**
(21) Anmeldenummer: 12743077.5
(22) Anmeldetag: 26.07.2012
(51) Int. Cl.: F03B 11/04, F03B 3/18, F03B 3/02, F03B 11/02

(54) **HYDRAULISCHE MASCHINE**
HYDRAULIC MACHINE
MACHINE HYDRAULIQUE

(30) Priorität: 19.10.2011 DE 102011116277
(43) Veröffentlichungstag der Anmeldung: 27.08.2014
(73) Patentinhaber: Voith Patent GmbH, 89522 Heidenheim (DE)
(72) Erfinder: HYNECK, Sebastian, 89522 Heidenheim (DE); WENGERT, Gerhard, 89437 Hannsheim (DE)
(74) Vertreter: Dr. Weitzel & Partner
(86) Internationale Anmeldenummer: PCT/EP2012/003158
(87) Internationale Veröffentlichungsnummer: WO 2013/056757

(56) Entgegenhaltungen:
- EP-A2- 1 504 190
- WO-A2-03/098032
- DE-A1-102006 050 203
- US-A- 4 135 853

## Beschreibung

Die Erfindung betrifft eine hydraulische Maschine, insbesondere eine Wasserturbine, Pumpturbine oder Pumpe, gemäß dem Oberbegriff von Anspruch 1. Dabei kann es sich um Maschinen der Francis-Bauart oder der Kaplan-Bauart oder um sonstige Maschinen handeln. Wesentlich ist, dass es um Maschinen mit einem Spiralgehäuse geht.

Als Beispiel wird auf US-A-4 496 28, DE 10 2006 050203 A1 oder auf DE 199 50 228 A1 verwiesen.

Das Spiralgehäuse einer solchen Maschine umschließt das Laufrad. Es liegt in einer zur Drehachse des Laufrades senkrechten Ebene. Da die Laufradachse im Allgemeinen vertikal verläuft, handelt es sich dabei um eine horizontale Ebene.

Das Spiralgehäuse ist aus Segmenten aufgebaut. Diese stoßen in Strömungsrichtung gesehen aneinander an und sind miteinander verschweißt. Das Spiralgehäuse ist auf seiner Innenseite gegen das Laufrad hin offen. Es weist somit einen Schlitz auf, der um den inneren Umfang des Spiralgehäuses herumläuft, so dass Medium aus dem Spiralgehäuse durch den Schlitz auf dem gesamten inneren Umfang zum Laufrad strömen kann. Der Schlitz ist somit durch zwei umlaufende Kanten definiert.

An den genannten Schlitz schließt sich in Strömungsrichtung gesehen ein Traversenring an. Diese umfasst zwei Traversenringdecks, die zur Drehachse des Laufrades konzentrisch angeordnet sind und einen gegenseitigen Abstand in axialer Richtung haben. Die Decks sind durch Zuganker miteinander verbunden, sogenannte Traversen. Außerdem ist jede der genannten umlaufenden Kanten des Spiralgehäuses mit einem der beiden Traversenringdecks fest verbunden.

Der Traversenring dient unter anderem dazu, ein Aufweiten des Spiralgehäuses unter dem hohen Innendruck zu verhindern. Die Zuganker lenken die Strömung vom Spiralgehäuse in die Maschinenmitte.

Es wirken somit Kräfte auf die genannten Zuganker ein, ferner auf die Verbindungsstelle zwischen dem betreffenden Traversenringdeck und der zugehörenden umlaufenden Kante des Spiralgehäuses. Die Verbindung muss absolut zuverlässig ausgeführt sein und hohen Kräften Stand halten. Dabei ist zu berücksichtigen, dass im Spiralgehäuse auch Druckschwankungen oder Druckschwingungen auftreten können.

Es wurden erhebliche Anstrengungen unternommen, die Verbindung dauerhaft und zuverlässig zu gestalten, bei geringstmöglichem Materialeinsatz. Im allgemeinen handelt es sich um eine Schweißverbindung zwischen der betreffenden umlaufenden Kante des Spiralgehäuses und dem zugehörenden Traversenringdeck. Die Herstellung dieser Verbindung hat sich als aufwändig erwiesen.

Ferner ist die Festigkeit des Spiralgehäuses selbst problematisch. Das Spiralgehäuse steht während des Betriebes unter einem hohen Wasserdruck. Der Wasserdruck führt zu einer Verformung der Segmentbleche sowie zu hohen Spannungen. Die Verformung ist nachteilig für den Wirkungsgrad der Turbine. Die hohen Wasserdrücke führen aber auch zu einer hohen Spannungskonzentration. Dies kann zu Schäden führen. Solche Spannungskonzentrationen treten insbesondere an der Übergangsstelle zwischen zwei einander benachbarten Segmenten sowie einem Deck des Traversenringes auf.

Zur Abhilfe wird in WO 03/098032 A1 vorgeschlagen, im Bereich des Überganges zweier einander benachbarter Segmente zum Deck des Traversenringes ein Verstärkungsblech vorzusehen, und zwar auf der Außenseite der Segmente. Diese Lösung hat jedoch auch nicht zu befriedigenden Ergebnissen geführt.

Der Erfindung liegt die Aufgabe zugrunde, eine hydraulische Maschine gemäß dem Oberbegriff von Anspruch 1 derart zu gestalten, dass die im genannten Bereich zwischen zwei einander benachbarten Segmenten und dem zugehörenden Deck auftretenden Spannungen zuverlässig beherrscht werden, ohne dass es zu übermäßigen Belastungen und Verformungen kommt.

Diese Aufgabe wird durch die Merkmale von Anspruch 1 gelöst.

Die Erfinder sind einen anderen Weg gegangen, als in der genannten WO-Schrift. Statt eine Versteifung auf der Außenfläche der Segmente vorzusehen, haben sie auf der Innenseite ein Versteifungselement vorgesehen. Das Versteifungselement ist extrem klein. Es erstreckt sich nur sehr wenig in den Innenraum des Spiralgehäuses hinein, sodass die Strömung nicht nennenswert beeinträchtigt wird. Am besten wird es dadurch hergestellt, dass die einander benachbarten Ecken der Enden zwei einander benachbarter Segmente nach innen umgebogen und zu einem dachartigen Vorsprung vereinigt werden, beispielsweise durch Schweißen. Man könnte dies auch als "eingezogene Ecke" bezeichnen. So erstreckt sich der Vorsprung in einem praktischen Falle beispielsweise nur um einen Bruchteil der radialen Erstreckung des Traversenringdecks in den Innenraum des Spiralgehäuses. Auch die Erstreckung in Richtung des Stoßes der einander benachbarten Segmente ist in gleichem Maße gering.

Durch die Erfindung wird die Spannung an den Übergangsstellen deutlich verringert, insbesondere die Spannungsspitzen. Die Lebensdauer des Spiralgehäuses wird gesteigert.

Statt den Vorsprung aus den Ecken von Enden einander benachbarter Spiralen zu bilden, käme auch in Betracht, eigens gefertigte Versteifungselemente zu verwenden, die beispielsweise wiederum eine Dachform haben können.

Das Überraschende an der Erfindung besteht darin, dass die Versteifungselemente, obwohl nach innen ragend, einen größeren Festigkeitseffekt haben, als jene des Standes der Technik. So wird mit geringem Aufwand ein großer Erfolg erzielt. Die Strömung im Spiralgehäuse wird in keiner Weise beeinträchtigt.

Zusätzlich zu dem Gedanken des nach innen ragenden Versteifungselementes ist es zweckmäßig, das einzelne Segment aus Kreisbögen unterschiedlicher Durchmesser zu bilden.

Der Stand der Technik sowie die Erfindung sind anhand der Zeichnung näher erläutert. Darin ist im einzelnen folgendes dargestellt:
- Figur 1: zeigt die wesentlichen Bauteile einer konventionellen Francis-Turbine in einem Meridianschnitt.
- Figur 2: zeigt wiederum in einem Meridianschnitt ein Spiralgehäuse mit den beiden Traversenringdecks eines Traversenrings gemäß einer ersten Ausführungsform der Erfindung.
- Figur 3: zeigt wiederum in einem Meridianschnitt ein Spiralgehäuse mit den beiden Traversenringdecks eines Traversenrings gemäß einer zweiten Ausführungsform der Erfindung.
- Figur 4: zeigt ein erfindungsgemäßes Segment in einer perspektivischen Ansicht.
- Figur 5: zeigt das Segment gemäß Figur 4 in Draufsicht.
- Figur 6: zeigt eine Reihe von Segmenten, die zusammengefügt sind.
- Figur 7: ist eine Ansicht auf ein erfindungsgemäßes Spiralgehäuse von außen.
- Figur 8: ist eine Ansicht auf das Spiralgehäuse gemäß Figur 7 von innen.
- Figur 9: ist eine 3D-Ansicht auf ein Spiralgehäuse von innen, und zwar auf eine Versteifungsecke.

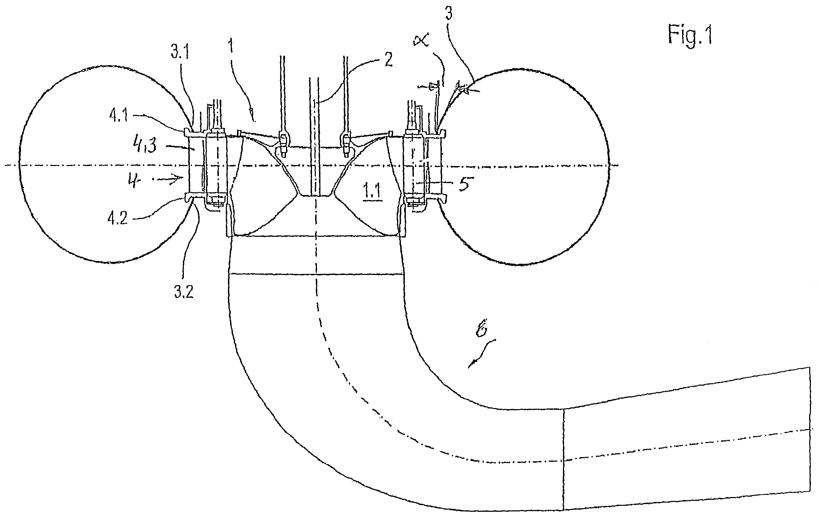

Die in Figur 1 dargestellte Francis-Turbine weist ein Laufrad 1 auf. Dieses umfasst eine Vielzahl von Schaufeln 1.1. Das Laufrad 1 läuft um eine Drehachse 2.

Das Laufrad 1 ist von einem Spiralgehäuse 3 umschlossen. Das Spiralgehäuse 3 ist zum Beispiel von kreisförmigem Querschnitt. Es hat eine umlaufende schlitzförmige Öffnung gegen das Laufrad 1 hin. Der Öffnungsschlitz ist begrenzt durch umlaufende Kanten 3.1, 3.2.

An den umlaufenden, aus den Kanten 3.1, 3.2 gebildeten Schlitz schließt sich ein Traversenring 4 an. Dieser weist zwei Traversenringdecks 4.1 und 4.2 auf. Eine Traverse 4.3 dient jeweils als Zuganker.

Die Bereiche der umlaufenden Kanten 3.1, 3.2 des Spiralgehäuses sind mit den Traversenringdecks 4.1, 4.2 verschweißt.

Zwischen Traversenring und Laufrad ist ein Leitapparat mit Leitschaufeln 5 vorgesehen.

An das Laufrad 1 ist in Strömungsrichtung gesehen ein Saugrohr 6 angeschlossen, das mehrere Abschnitte aufweist.

Wie man sieht, ist das Spiralgehäuse von kreisförmigem Querschnitt. Die Bereiche der umlaufenden Kanten sind an den Anschlussstellen zu den beiden Traversenringdecks 4.1, 4.2 gegen die Vertikale geneigt. Dies bedeutet, dass die Kantenbereiche des Spiralgehäuses nicht parallel zur Drehachse 2 des Laufrades 1 verlaufen. Siehe in Figur 1 Winkel α. Dieser liegt bei annähernd 15 bis 40 Grad.

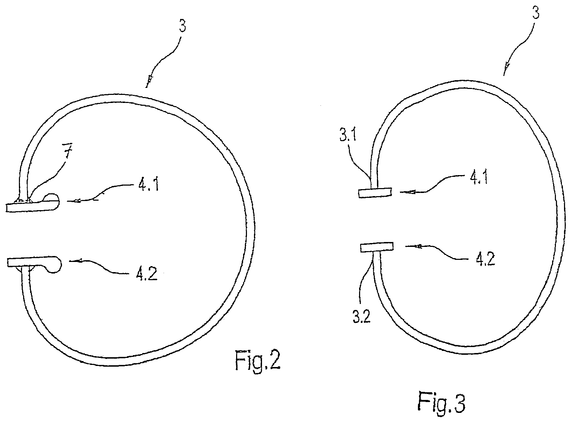

Die Figuren 2 und 3 veranschaulichen zwei verschiedene Ausführungsformen der Erfindung. Im Übrigen können die zugehörenden hydraulischen Maschinen gleich aufgebaut sein, wie die in Figur 1 dargestellte Maschine.

Den beiden Ausführungsformen gemäß Figur 2 und 3 ist gemeinsam, dass die Spiralgehäuse im Bereich der umlaufenden Kanten 3.1, 3.2 fast senkrecht auf den Anschlussflächen der zugehörenden Traversenringdecks 4.1, 4.2 stehen.

Bei der Ausführungsform gemäß Figur 2 wird dies dadurch erreicht, dass die Kantenbereiche des Spiralgehäuses 3 gegenüber der Kreisform verformt sind. Sie verlaufen praktisch parallel zur Drehachse 2 gemäß Figur 1. Die Befestigung ist mittels Schweißnähten 7 hergestellt.

Bei der zweiten Ausführungsform gemäß Figur 3 sind die Traversenringe 4.1, 4.2 wiederum von konventioneller Gestalt und Anordnung. Die Kantenbereiche 3.1, 3.2 stehen wiederum senkrecht auf den Traversenringdecks 4.1, 4.2 und verlaufen dem gemäß parallel zur Drehachse 2 des Laufrades 1. Der übrige Querschnitt des Spiralgehäuses 3 ist annähernd elliptisch.

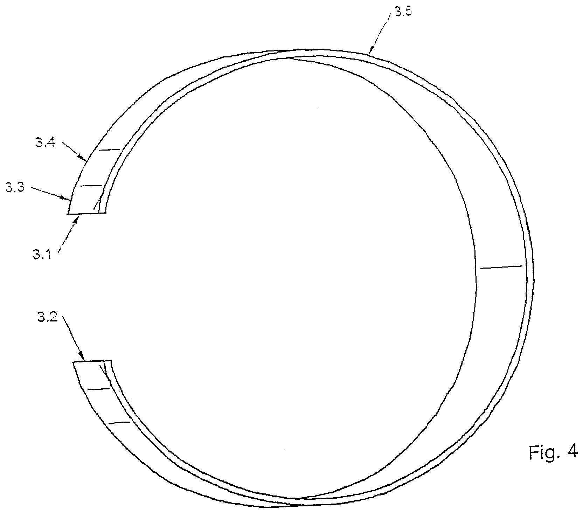

Das in Figur 4 gezeigte Kreissegment ist aus Kreisbogen unterschiedlicher Durchmesser aufgebaut. Man erkennt die beiden umlaufenden Kanten 3.1, 3.2. An diese schließt sich ein gerader Anschlussstrich 3.3 an, gefolgt von einem ersten Kreisbogen 3.4 kleineren Durchmessers und einem zweiten Kreisbogen 3.5 größeren Durchmessers.

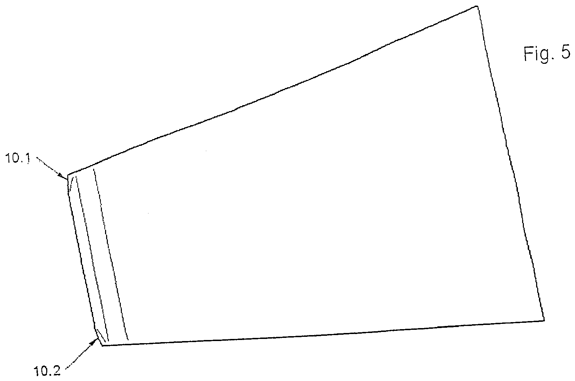

Dieselben Formen sind wiederum in Figur 5 erkennbar.

Ein entscheidendes Merkmal der Erfindung sind die beiden Versteifungsecken (eingezogenen Ecken) 10.1, 10.2, auf die weiter unten noch eingegangen werden soll.

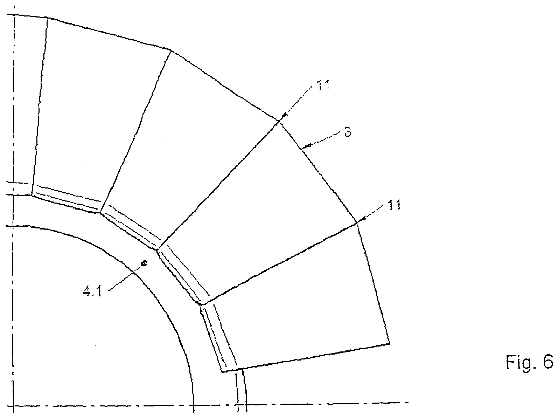

Figur 6 zeigt mehrere Segmente, die aneinanderstoßen - siehe die Stoßstellen 11, die miteinander verschweißt sind. Die Segmente sitzen auf einem Traversenringdeck 4.1 auf, mit dem sie ebenfalls verschweißt sind. Am radial inneren Ende einer jeden Stoßstelle 11 und zugleich am Traversenringdeck 4.1 befinden sich Versteifungselemente 10, beispielsweise gebildet aus den Versteifungsecken 10.1, 10.2 gemäß Figur 5.

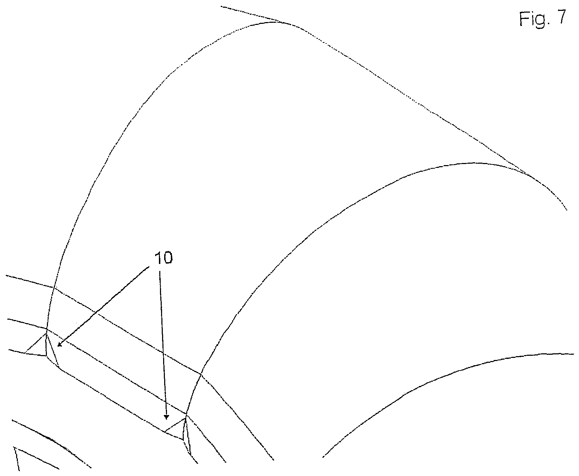

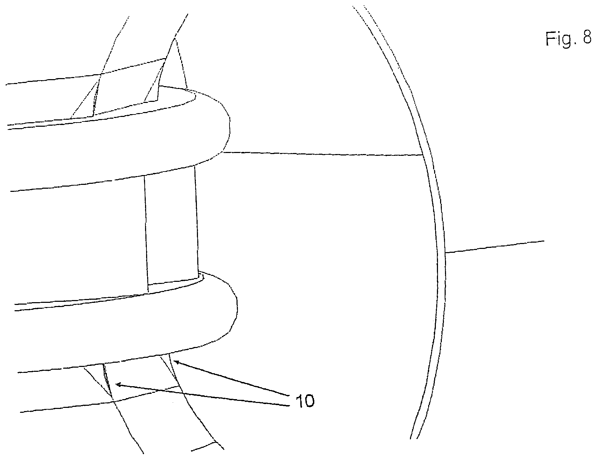

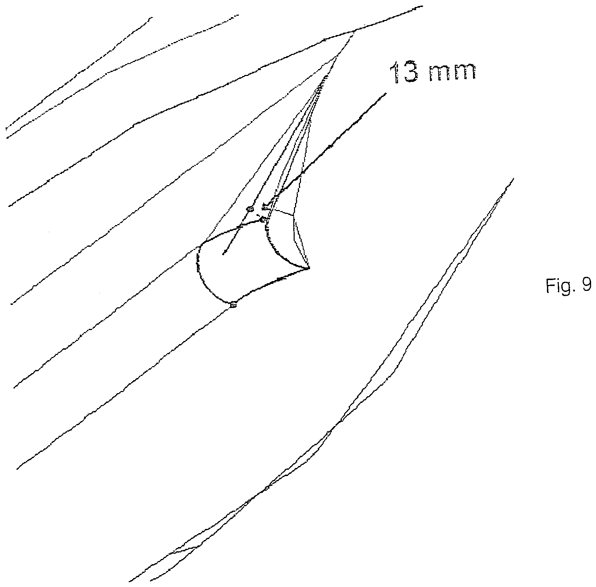

Wie die Versteifungsecken aussehen, erkennt man am besten aus den Figuren 7, 8 und 9.

Durch die Erfindung werden die Spannungsspitzen an den Übergangsstellen - vor allem an den Stoßstellen und insbesondere dort, wo die Stoßstellen auf das betreffende Transversalringdeck treffen, deutlich abgebaut. Damit wird die Lebensdauer des Spiralgehäuses erhöht. Alternativ können für die Segmente des Spiralgehäuses dünnere Bleche verwendet werden, womit sich Gewicht und Herstellungskosten reduzieren.

Die erfindungsgemäßen Versteifungsecken oder eingezogene Ecken sind ähnlich einem Eselsohr in einem Buch gestaltet. Sie werden erzeugt durch Umbiegen der radial inneren Ecken der Spiralen-Segmente. Sie verteilen und reduzieren die Biegespannung in einem breiteren Bereich rund um die Übergangsstelle.

Die Versteifungsecken sind, wie oben ausgeführt, in den Innenraum des Spiralgehäuses hineingebogen und ragen damit in die Strömung. Erstaunlich ist, dass die Einflüsse auf die Hydraulik unkritisch sind. Das Einkragen beträgt nur wenige Millimeter, im konkreten Falle 2 - 20 mm, beispielsweise 10 - 15 mm oder 5 - 10 mm. Die Einkragung kann ganz allgemein 0,5 - 1,0 % des Durchmessers der Spirale an der betreffenden Stelle betragen.

Das Erzeugen einer Versteifungsecke durch Umbiegen von Segmentecken bedeutet zwar einen weiteren Schritt in der Herstellung des Spiralgehäuses. Jedoch besteht ein großer Vorteil darin, dass ein zusätzliches Schweißen hierbei nicht notwendig ist.

Die Belastung an den hochbelasteten Übergangsstellen bei einem Spiralgehäuse gemäß der Erfindung hat gezeigt, dass sie nur 0,5 - 0,7 der Belastung eines klassischen Spiralgehäuses beträgt.

Die Gestaltung des einzelnen Segmentes aus Abschnitten unterschiedlicher Radien hat sich ebenfalls als vorteilhaft für eine Verringerung der Belastung gezeigt.

### Bezugszeichenliste

- 1: Laufrad
- 1.1: Schaufeln
- 2: Drehachse
- 3: Spiralgehäuse
- 3.1: umlaufende Kante des Spiralgehäuses
- 3.2: umlaufende Kante des Spiralgehäuses
- 3.3: gerades Anschlussstück
- 3.4: erster Kreisbogen kleineren Durchmessers
- 3.5: zweiter Kreisbogen größeren Durchmessers
- 4: Traversenring
- 4.1: Traversenringdeck
- 4.2: Traversenringdeck
- 4.3: Traverse
- 5: Leitschaufel
- 6: Saugrohr
- 7: Schweißnähte
- 10: Versteifungselement
- 10.1: Versteifungsecken
- 10.2: Versteifungsecken
- 11: Stoßstellen

## Patentansprüche

1. Hydraulische Maschine
1.1 mit einem Laufrad (1), das eine Vielzahl von Schaufeln (1.1) aufweist;
1.2 mit einem Spiralgehäuse (3), das das Laufrad (1) umschließt und gegen dieses hin durch einen umlaufenden Schlitz offen ist, gebildet aus zwei umlaufenden Kanten (3.1, 3.2);
1.3 mit einem Traversenring (4), umfassend zwei Traversenringdecks (4.1, 4.2), die durch Zuganker (4.3) miteinander verbunden sind;
1.4 das Spiralgehäuse ist aus Segmenten zusammengesetzt, die in Strömungsrichtung aneinanderstoßen und miteinander verschweißt sind, und deren Enden auf dem betreffenden Traversenringdeck (4.1, 4.2) stehen und dort angeschweißt sind;
1.5 an der Stoßstelle (11) zwischen zwei einander benachbarten Segmenten und eines Traversenringdecks (4.1, 4.2) ist ein in den Innenraum des Spiralgehäuses (3) hineinragendes Versteifungselement (10) vorgesehen;
1.6 das Versteifungselement (10) ist durch Einziehen einer Ecke gebildet
1.7 die eingezogene Ecke ist durch Umbördeln von radial inneren Eckbereichen eines jeden Segmentes gebildet;
1.8 die eingezogene Ecke ragt um einen Betrag von 2 bis 20 mm in den Innenraum des Spiralgehäuses (3) hinein.

## Claims

1. A hydraulic machine;
1.1 comprising a blade wheel (1) which comprises a plurality of blades (1.1);
1.2 comprising a spiral housing (3) which encloses the blade wheel (1) and is open towards the same by a circumferential slit, formed by two circumferential edges (3.1, 3.2);
1.3 comprising a traverse ring (4), having two traverse ring decks (4.1, 4.2) which are connected to each other by tie rods (4.3);
1.4 the spiral housing is made of segments which abut one another the direction of flow and are welded together, and whose ends stand on the respective traverse ring deck (4.1, 4.2) to which they are welded;
1.5 a stiffening element (10) which protrudes into the interior space of the spiral housing (3) is provided at the abutment point (11) between two mutually adjacent segments and a traverse ring deck (4.1, 4.2);
1.6 the stiffening element (10) is formed by a withdrawn corner;
1.7 the extension of the stiffening element (10) into the interior space of the spiral housing (3) is between 2 and 20 mm.

## Revendications

1. Machine hydraulique
1.1 avec une roue (1) présentant un grand nombre d'aubes (1.1) ;
1.2 avec un corps de volute (3) qui entoure la roue (1) et qui est ouvert vers celle-ci par une fente circonférentielle formée de deux bords circonférentiels (3.1, 32) ;
1.3 avec une traverse annulaire (4) comprenant deux flasques de traverse annulaire (4.1, 4.2) reliés entre eux par des tirants d'ancrage (4.3) ;
1.4 le corps de volute étant assemblé à partir de segments mis bout à bout dans le sens d'écoulement et soudés les uns aux autres, dont les extrémités sont posées sur le flasque de traverse annulaire (4.1, 4.2) correspondant et y sont soudées ;
1.5 un élément raidisseur (10) qui dépasse dans l'espace intérieur du corps de volute (3) étant prévu sur le joint bout à bout (11) entre deux segments voisins et un des flasques de traverse annulaire (4.1, 4.2) ;
1.6 l'élément raidisseur (10) étant formé en rentrant un coin ;
1.7 le coin rentré étant formé en retournant les zones de coin intérieures dans le sens radial de chaque segment ;
1.8 le coin rentré dépassant de 2 à 20 mm dans l'espace intérieur du corps de volute (3).
